# FASCICULE DE BREVET EUROPEEN

(11) **EP 1 451 451 B1**
(45) Date de publication et mention de la délivrance du brevet: **30.08.2006**
(21) Numéro de dépôt: 02802666.4
(22) Date de dépôt: 25.10.2002
(51) Int. Cl.: F01N 1/08

(54) **SILENCIEUX DE DETENTE D'UN GAZ**
GASEXPANSIONSSCHALLDÄMPFER
GAS EXPANSION SILENCER

(30) Priorité: 09.11.2001 FR 0114683
(43) Date de publication de la demande: 01.09.2004
(73) Titulaire: Bertin Technologies, 75008 Paris (FR)
(72) Inventeur: FRIOU, Claude, F-78113 Conde sur Vesgre (FR)
(74) Mandataire: Ramey, Daniel
(86) Numéro de dépôt international: PCT/FR2002/003686
(87) Numéro de publication internationale: WO 2003/040527

(56) Documents cités:
- EP-A- 0 404 801
- FR-A- 2 055 030

## Description

La présente invention concerne un silencieux de détente d'un gaz, du type comprenant un embout tubulaire de liaison à une alimentation de gaz sous pression en écoulement subsonique, et un étage basse pression relié à l'embout par des trous à écoulement sonique du gaz et comportant, à son extrémité opposée à l'embout, des orifices de sortie du gaz à vitesse subsonique, cet étage basse pression étant entièrement rempli d'une garniture métallique poreuse.

Un tel silencieux est décrit dans le document EP-A-0404801 et est utilisable comme injecteur ou éjecteur pour la détente d'un gaz notamment dans un dispositif de soufflage qui comprend une série de ces silencieux alimentés en air chaud pour le dégivrage des filtres d'entrée d'air de grands compresseurs ou de grandes turbines à gaz. Il permet une atténuation de 25 à 45 dB environ du bruit qui serait produit par une détente sonique directe à l'air libre pour une même section de sortie d'air chaud, et présente de nombreux avantages par rapport aux dispositifs concurrents de la technique antérieure, comme décrit dans le document EP-A-0404801 précité auquel on pourra se reporter en cas de besoin et dont le contenu est incorporé ici par référence.

La présente invention a pour objet des perfectionnements à ce silencieux, permettant d'augmenter encore son efficacité et ses performances.

Elle propose à cet effet un silencieux du type précité pour la détente d'un gaz, comprenant un embout tubulaire de liaison à une alimentation de gaz sous pression en écoulement subsonique, et un étage basse pression dont une extrémité communique avec l'embout par une série de trous d'entrée à écoulement du gaz à vitesse sonique et dont l'autre extrémité comporte des orifices de sortie du gaz à vitesse subsonique, l'étage basse pression étant entièrement rempli d'une garniture métallique poreuse, caractérisé en ce que l'étage basse pression comprend au moins deux parties cylindriques de diamètres différents, montées axialement bout à bout et communiquant entre elles, la partie de plus petit diamètre étant reliée à l'embout précité et la partie de plus grand diamètre comportant les orifices de sortie du gaz, les longueurs axiales des parties cylindriques de l'étage basse pression étant déterminées pour que l'extrémité de la partie de petit diamètre qui est reliée à l'extrémité de la partie de grand diamètre fasse écran entre les trous d'entrée et les orifices de sortie.

Grâce à cette caractéristique de l'étage basse pression, on crée un effet de masque ou de coude entre les trous d'entrée du gaz et les orifices de sortie, cet effet de masque ou de coude apportant une atténuation acoustique supplémentaire du bruit résultant de la détente sonique du gaz dans les trous d'entrée.

Selon une autre caractéristique de l'invention, les orifices de sortie sont formés dans la paroi cylindrique de la partie de plus grand diamètre et sont alimentés par un écoulement de gaz sensiblement radial.

On augmente ainsi l'effet de coude précité, du fait que les orifices de sortie du gaz ne sont pas en vue directe des trous d'entrée.

De plus, l'écoulement radial du gaz vers les orifices de sortie permet une alimentation sensiblement homogène de ces orifices, de sorte que la vitesse de sortie du gaz est sensiblement constante dans ces orifices. On évite ainsi des survitesses susceptibles de produire du bruit en sortie de l'étage basse-pression.

Avantageusement, les orifices de sortie, qui sont formés sur la partie cylindrique de plus grand diamètre, peuvent être répartis le long d'une seule circonférence, ce qui améliore encore l'uniformité de leur alimentation.

Dans une variante de réalisation de l'invention, l'étage basse pression comprend au moins une troisième partie cylindrique, qui relie la partie de plus petit diamètre à la partie de plus grand diamètre et qui a un diamètre intermédiaire entre le plus petit et le plus grand diamètre précité.

L'invention concerne également un dispositif de soufflage de gaz, comportant une pluralité de silencieux alimentées par des rampes parallèles raccordées à un collecteur d'alimentation, ce dispositif étant caractérisé en ce que les silencieux sont du type décrit ci-dessus.

De façon générale, l'invention permet une plus grande atténuation acoustique du bruit produit par la détente sonique du gaz, cette atténuation acoustique étant de l'ordre de 35 à 55 dB environ par rapport au bruit qui serait produit par une détente sonique directe du gaz à l'air libre pour une même section de sortie.

On gagne donc encore 5 à 10 dB environ par rapport au silencieux décrit dans le document EP-A-0404801 précité.

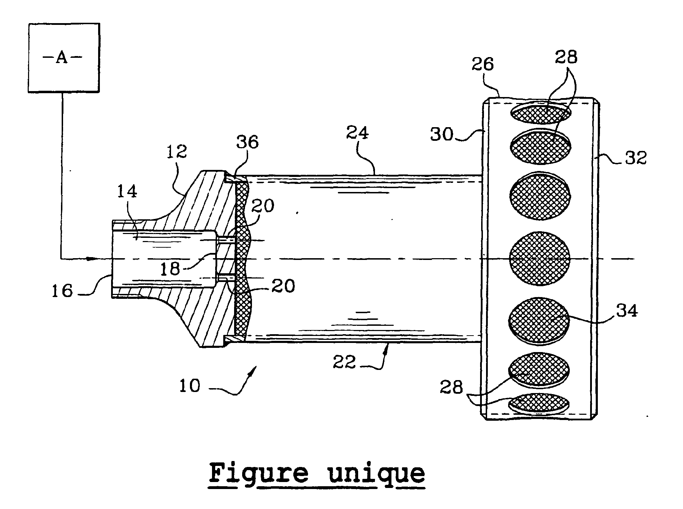

L'invention sera mieux comprise et d'autres caractéristiques, détails et avantages de celle-ci apparaîtront plus clairement à la lecture de la description qui suit, faite à titre d'exemple en référence au dessin annexé, qui est une vue schématique en coupe axiale partielle d'un silencieux selon l'invention.

Le silencieux 10 représenté au dessin comprend un embout tubulaire 12, formé d'une pièce massive en acier inoxydable par exemple, qui comporte un passage cylindrique axial 14 dont une extrémité ouverte 16 est destinée à être reliée à une alimentation en gaz sous pression A à écoulement subsonique et dont l'extrémité opposée est fermée par une paroi transversale de fond 18 dans laquelle sont formés, par exemple par perçage, des trous 20 parallèles à l'axe, qui sont les trous d'entrée du gaz dans un étage basse pression 22.

Cet étage basse pression 22 comprend une enveloppe métallique formée de deux parties cylindriques 24, 26 de diamètres différents, dont la partie 24 de plus petit diamètre est raccordée à l'embout d'alimentation 12 et dont la partie 26 de plus grand diamètre est raccordée à la partie 24 et comporte des orifices 28 de sortie de gaz dans le milieu environnant.

Les orifices 28 sont formés dans une paroi cylindrique de la partie 26 de plus grand diamètre et sont ici répartis le long d'une seule circonférence. En variante, ces orifices 28 pourraient être répartis le long de plusieurs circonférences, et disposés en quinconce d'une circonférence à l'autre.

Les deux parties 24, 26 sont reliées l'une à l'autre à étanchéité par une paroi transversale 30, fixée par exemple par soudure, et communiquent par leurs espaces internes. L'extrémité de la partie cylindrique 26 de plus grand diamètre, qui est située du côté opposé à la partie 24 de plus petit diamètre, est fermée de façon étanche par une paroi transversale de fond 32, qui est par exemple soudée sur la paroi cylindrique de la partie 26.

L'étage basse pression formé par les parties cylindriques 24 et 26 est entièrement rempli d'une garniture métallique poreuse 34, de son extrémité reliée à l'embout 12 jusqu'à la paroi de fond 32 fermant la partie 26 de plus grand diamètre.

Comme indiqué dans le document antérieur précité, cette garniture métallique peut être une mousse métallique à cellules ouvertes, ayant une porosité supérieure à 50%, ou encore un tricot métallique qui est gaufré et enroulé serré sur lui-même pour former un cylindre, ou un tissu de fil métallique enroulé sur lui-même pour former un rouleau cylindrique serré. De préférence, la porosité de la garniture métallique 34 est de 85-95% environ.

Le silencieux selon l'invention est constitué d'éléments simples, peu coûteux et faciles à assembler. Comme représenté au dessin, la partie cylindrique 24 de plus petit diamètre est engagée par son extrémité sur un épaulement 36 de la périphérie de la paroi de fond 18 de l'embout 12 et est fixée sur cette paroi de fond par exemple par soudure.

Les dimensions axiales et radiales des parties 24, 26 de l'étage basse pression 22 sont telles que les orifices de sortie 28 ne sont pas en vue directe des trous d'entrée 20, ce qui créé un effet de coude ou de masque sur l'écoulement de gaz dans l'étage basse-pression. Cet effet de coude ou de masque provoque une réflexion supplémentaire des ondes acoustiques et augmente l'atténuation du bruit produit par la détente sonique du gaz dans les trous d'entrée 20.

De plus, grâce à cet effet de coude, les orifices de sortie sont alimentés par un écoulement sensiblement radial de gaz, qui est plus homogène et plus uniforme que dans le document antérieur précité. On évite ainsi les survitesses dans les orifices de sortie 28 et on évite les bruits qui seraient générés par ces survitesses.

Le rapport de la somme des sections des orifices de sortie 28 et de la somme des sections des trous d'entrée 20 est compris entre 5 et 500 environ dans le silencieux selon l'invention, ce qui assure un écoulement du gaz à vitesse subsonique faible dans les orifices de sortie 28.

Dans une variante de réalisation, le silencieux selon l'invention peut comprendre, dans l'étage basse pression 22, plus de deux parties cylindriques de diamètres différents, par exemple au moins trois parties cylindriques, dont les diamètres sont étagés de façon croissante entre l'embout d'alimentation 12 et les orifices de sortie de gaz dans le milieu environnant.

Le silencieux selon l'invention est réalisé avantageusement en acier inoxydable et est utilisable avec des gaz corrosifs ou des gaz à température élevée (par exemple jusqu'à 600°C environ), fournis à une pression qui peut atteindre 50 bars environ. Dans l'exemple représenté au dessin, la partie 24 a un diamètre extérieur de 90 mm environ, la partie 26 a un diamètre extérieur de 170 mm environ, la longueur totale est de 230 mm environ et le débit de gaz (air, vapeur d'eau ou autre) peut varier entre 50 et 300 g/s environ.

En variante, pour certaines applications, la partie 26 peut être délimitée par une tôle perforée
ou un grillage. Dans le cas où un grillage entoure la garniture métallique poreuse 34, c'est la porosité de cette dernière qui détermine la section de sortie du gaz détendu.

## Revendications

1. Silencieux de détente d'un gaz, comportant un embout tubulaire (12) de liaison à une alimentation de gaz sous pression en écoulement subsonique, et un étage basse pression (22) qui communique avec l'embout (12) par une série de trous d'entrée (20) à écoulement du gaz à vitesse sonique et qui comporte des orifices (28) de sortie du gaz à vitesse subsonique, l'étage basse pression étant entièrement rempli d'une garniture métallique poreuse (34), **caractérisé en ce que** l'étage basse pression (22) comprend au moins deux parties cylindriques (24, 26) de diamètres différents communiquant entre elles, la partie (24) de plus petit diamètre étant reliée à l'embout (12) précité et la partie (26) de plus grand diamètre comportant les orifices de sortie du gaz, la partie de petit diamètre (24) étant reliée à la partie de grand diamètre (26) par un coude formant écran entre les trous d'entrée (20) et les orifices de sortie (28).

2. Silencieux selon la revendication 1. **caractérisé en ce que** les orifices de sortie (28) sont formés dans une paroi cylindrique de la partie de grand diamètre (26) et sont alimentés par un écoulement de gaz sensiblement radial.

3. Silencieux selon l'une des revendications précédentes, **caractérisé en ce que** les orifices de sortie (28) sont répartis le long d'une seule circonférence.

4. - Silencieux selon l'une des revendications précédentes, **caractérisé en ce que** l'étage basse pression (22) comprend au moins une troisième partie cylindrique, reliant la partie de plus petit diamètre (22) à la partie de plus grand diamètre (26) et ayant un diamètre intermédiaire entre le plus petit et le plus grand diamètre.

5. - Silencieux selon l'une des revendications précédentes, **caractérisé en ce que** le rapport de la somme des sections des orifices de sortie (28) et de la somme des sections des trous d'entrée (20) est compris entre 5 et 500, environ.

6. - Silencieux selon l'une des revendications précédentes, **caractérisé en ce que** la garniture métallique (34) a une porosité de 85-95% environ.

7. - Silencieux selon l'une des revendications précédentes, **caractérisé en ce que** l'embout précité est formé d'une seule pièce et comporte un passage cylindrique (14) dont une extrémité ouverte est destinée à être reliée à l'alimentation en gaz sous pression et dont l'extrémité opposée est fermée par une paroi transversale de fond (18) à travers laquelle sont formés les trous d'entrée (20).

8. - Silencieux selon la revendication 7, **caractérisé en ce que** la partie de plus petit diamètre (24) de l'étage basse pression est engagée par son extrémité cylindrique sur un épaulement (36) de ladite paroi de fond (18) de l'embout et est fixée par exemple par soudure sur cet épaulement.

9. - Silencieux selon l'une des revendications 1 à 8, **caractérisé en ce que** la partie (26) de grand diamètre est délimitée par une tôle perforée ou un grillage.

10. - Dispositif de soufflage de gaz comportant une pluralité de silencieux (10) alimentés par des rampes parallèles raccordées à un collecteur d'alimentation, **caractérisé en ce que** les silencieux (10) sont du type décrit dans l'une des revendications précédentes.

## Claims

1. A gas expansion silencer comprising a tubular endpiece (12) for connection to a supply of gas under pressure flowing subsonically, and a low-pressure stage (22) communicating with the endpiece (12) via a series of inlet holes (20) for gas flow at sonic speed and comprising orifices (28) for gas outlet at subsonic speed, the low-pressure stage being filled entirely with porous metal packing (34), the silencer being **characterized in that** the low-pressure stage (22) comprises at least two cylindrical portions (24, 26) of different diameters communicating with one another, the smaller-diameter portion (24) being connected to the above-mentioned endpiece (12) and the larger-diameter portion (26) including the gas outlet orifices, the smaller-diameter portion (24) being connected to the end of the larger-diameter portion (26) by a bend which constitutes a screen between the inlet holes (20) and the outlet orifices (28).

2. A silencer according to claim 1, **characterized in that** outlet orifices (28) are formed in a cylindrical wall of the larger-diameter portion (26) and they are fed with a flow of gas that is substantially radial.

3. A silencer according to either preceding claim, **characterized in that** the outlet orifices (28) are distributed around a single circumference.

4. A silencer according to any preceding claim, **characterized in that** the low-pressure stage (22) includes at least one third cylindrical portion interconnecting the smaller-diameter portion (22) and the larger-diameter portion (26) and having a diameter intermediate between that of the smaller-diameter portion and the larger-diameter portion.

5. A silencer according to any preceding claim, **characterized in that** the ratio of the sum of the sections of the outlet orifices (28) over the sum of the sections of the inlet holes (20) lies in the range approximately 5 to approximately 500.

6. A silencer according to any preceding claim, **characterized in that** the metal packing (34) has porosity of about 85% to about 95%.

7. A silencer according to any preceding claim, **characterized in that** the above-mentioned endpiece is formed as a single piece and has a cylindrical passage (14) with one end that is open for connection to the supply of gas under pressure and whose opposite end is closed by a transverse end wall (18) through which the inlet holes (20) are formed.

8. A silencer according to claim 7, **characterized in that** the smaller-diameter portion (24) of the low-pressure stage has its cylindrical end engaged on a shoulder (36) of said end wall (18) of the endpiece and is fastened to said shoulder by welding, for example.

9. A silencer according to any one of claims 1 to 8, **characterized in that** the larger-diameter portion (26) is defined by a perforated metal sheet or by a grid.

10. A gas blower device having a plurality of silencers (10) fed by parallel strips connected to a feed manifold, the device being **characterized in that** the silencers (10) are of the type described in any preceding claim.

## Patentansprüche

1. Gasexpansionsschalldämpfer, mit einem röhrenförmigen Ansatzstück (12) zum Anschluss an eine Zuleitung von Druckgas, das mit Unterschallgeschwindigkeit strömt, und einer Niederdruckstufe (22), die mit dem Ansatzstück (12) durch eine Reihe von Löchern (20) zum Eintritt von mit Schallgeschwindigkeit strömendem Gas kommuniziert und die Öffnungen (28) zum Gasaustritt mit Unterschallgeschwindigkeit aufweist, wobei die Niederdruckstufe vollständig mit einer porösen Metallpackung (34) gefüllt ist,
**dadurch gekennzeichnet, dass** die Niederdruckstufe (22) wenigstens zwei miteinander kommunizierende zylindrische Teile (24, 26) unterschiedlichen Durchmessers aufweist, wobei der Teil (24) mit kleinerem Durchmesser mit dem oben genannten Ansatzstück (12) verbunden Ist und der Teil (26) mit größerem Durchmesser die Gasaustrittsöffnungen umfasst, wobei der Teil mit kleinem Durchmesser (24) mit dem Teil mit großem Durchmesser (26) durch eine Krümmung verbunden ist, die zwischen den Eintrittslöchern (20) und den Austrittsöffnungen (28) eine Abschirmung bildet.

2. Schalldämpfer nach Anspruch 1,
**dadurch gekennzeichnet, dass** die Austrittsöffnungen (28) in einer zylindrischen Wand des Teils mit großem Durchmesser (26) gebildet sind und durch eine im Wesentlichen radiale Gasströmung gespeist werden.

3. Schalldämpfer nach einem der vorhergehenden Ansprüche,
**dadurch gekennzeichnet, dass** die Austrittsöffnungen (28) entlang einer einzigen Kreislinie verteilt sind.

4. Schalldämpfer nach einem der vorhergehenden Ansprüche,
**dadurch gekennzeichnet, dass** die Niederdruckstufe (22) wenigstens einen dritten zylindrischen Teil aufweist, der den Teil mit kleinerem Durchmesser (24) mit dem Teil mit größerem Durchmesser (26) verbindet und einen Durchmesser hat, der zwischen dem kleineren und dem größeren Durchmesser liegt.

5. Schalldämpfer nach einem der vorhergehenden Ansprüche,
**dadurch gekennzeichnet, dass** das Verhältnis der Summe der Querschnitte der Austrittsöffnungen (28) zur Summe der Querschnitte der Eintrittslöcher (20) etwa zwischen 5 und 500 liegt.

6. Schalldämpfer nach einem der vorhergehenden Ansprüche,
**dadurch gekennzeichnet, dass** die Metallpackung (34) eine Porosität von etwa 85 - 95 % hat.

7. Schalldämpfer nach einem der vorhergehenden Ansprüche,
**dadurch gekennzeichnet, dass** das oben genannte Ansatzstück einstückig ausgebildet ist und einen zylindrischen Durchlass (14) aufweist, von dem ein offenes Ende dazu bestimmt ist, an die Druckgaszuleitung angeschlossen zu werden, und dessen entgegengesetztes Ende durch eine quer verlaufende Bodenwand (18) geschlossen ist, in der die Eintrittslöcher (20) ausgebildet sind.

8. Schalldämpfer nach Anspruch 7,
**dadurch gekennzeichnet, dass** der Teil der Niederdruckstufe mit kleinerem Durchmesser (24) mit seinem zylindrischen Ende auf einen Absatz (36) der Bodenwand (18) des Ansatzstücks gesteckt ist und zum Beispiel durch Schweißen auf diesem Absatz befestigt ist.

9. Schalldämpfer nach einem der Ansprüche 1 bis 8,
**dadurch gekennzeichnet, dass** der Teil (26) mit großem Durchmesser durch ein perforiertes Blech oder ein Gitter begrenzt ist.

10. Vorrichtung zum Ein- oder Ausblasen von Gas, mit einer Vielzahl von Schalldämpfern (10), die über parallele, an einen Zuleitungsverteller angeschlossene Rampen versorgt werden,
**dadurch gekennzeichnet, dass** die Schalldämpfer (10) von dem In einem der vorhergehenden Ansprüche beschriebenen Typ sind.
